## Europäisches Patentamt

## European Patent Office

## Office européen des brevets

(19)

(11) Veröffentlichungsnummer: **0 195 741**
**B1**

(12) **EUROPÄISCHE PATENTSCHRIFT**

(45) Veröffentlichungstag der Patentschrift:
14.03.90

(51) Int. Cl.⁴: **H02K 1/27**, H02K 29/00

(21) Anmeldenummer: **86730048.5**

(22) Anmeldetag: **17.03.86**

(54) **Elektrische Maschine synchroner Bauart mit Dauermagneterregung.**

(30) Priorität: **22.03.85 DE 3510985**

(43) Veröffentlichungstag der Anmeldung:
**24.09.86 Patentblatt 86/39**

(45) Bekanntmachung des Hinweises auf die Patenterteilung:
**14.03.90 Patentblatt 90/11**

(84) Benannte Vertragsstaaten:
**CH DE FR LI SE**

(56) Entgegenhaltungen:
**DE-A- 3 224 904**
**FR-A- 1 176 490**
**FR-A- 2 362 520**
**GB-A- 1 028 058**
**US-A- 2 601 517**
**US-A- 3 124 733**

**PATENTS ABSTRACTS OF JAPAN, Band 4, Nr. 83 (E-15)**
**[565], 14. Juni 1980, Seite 70 E 15; & JP - A - 55 49 962**

(73) Patentinhaber: **Siemens Aktiengesellschaft,**
**Wittelsbacherplatz 2, D-8000 München 2(DE)**

(72) Erfinder: **Leitgeb, Wilhelm, Dr., Lenthersteig 21,**
**D-1000 Berlin 13(DE)**

**Beschreibung**

Die Erfindung bezieht sich auf eine elektrische Maschine synchroner Bauart, deren Ständerwicklung von einem Stromrichter gespeist und die durch Dauermagnete am Läufer erregt ist, zwischen denen sich Pollücken befinden, bei welcher der Läufer einen weichmagnetischen Teil aufweist, auf dessen Mantelfläche die Dauermagnete unmittelbar am (mechanischen) Luftspalt liegend angeordnet sind.

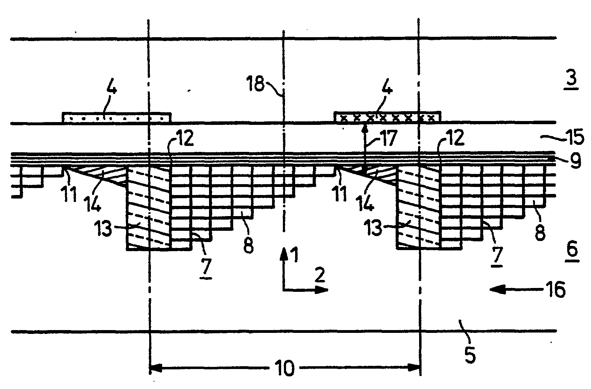

Eine derartige Maschine ist aus der etz, Band 100, Jahrgang 1979, Heft 24, Seiten 1382 bis 1386 (insbesondere Bild 3a) bekannt. Bei dieser bekannten elektrischen Maschine handelt es sich um den Synchronmotor eines Servoantriebs. Auf der Mantelfläche des Läufers aus Weicheisen sind Dauermagnete zur Erregung des Motors angeordnet. Die Dauermagnete weisen keine Polschuhe auf und liegen somit unmittelbar am Luftspalt. Sie sind in radialer Richtung magnetisiert und ihre Dicke, wie auch der mechanische Luftspalt, ist konstant. Ebenfalls ist der Abstand zwischen dem Läufereisen und der dem Läufer zugekehrten Oberfläche des Ständers konstant. Die Dauermagnete sind aus einem Werkstoff auf SmCo-Basis. Dieser Werkstoff weist eine hohe Remanenzinduktion und eine hohe Koerzitivfeldstärke auf. Einem Fremdfeld gegenüber verhält sich dieser Werkstoff in Bezug auf seine Permeabilität ähnlich wie Luft.

Die aus Spulen mit ungleicher Windungszahl bestehende Ständerdrehstromwicklung wird von einem Stromrichter mit sinusförmigen Drehströmen gespeist. Die Ständerströme bewirken einen Ständerstrombelag. Die Ströme sind läuferlageabhängig so geregelt, daß der Strombelag nur in der q-Achse geführt wird. Dadurch wird eine feste Zuordnung des Ständerstrombelags zum von den Dauermagneten hervorgerufenen Erregerfeld erzielt. Diese feste Zuordnung ist vergleichbar der durch Kommutator und Bürsten erzwungenen Orientierung des Läuferstrombelags zum ständerseitigen Erregerfeld bei einer Gleichstromkommutatormaschine mit ständerseitiger Erregung. Weil sich der Werkstoff der Dauermagnete gegenüber dem vom Ständerstrombelag hervorgerufenen Magnetfeld (Ankerfeld) ähnlich wie Luft verhält, ist für die Ausbildung des Ankerfeldes ein magnetischer Luftspalt wirksam, der sich aus dem mechanischen Luftspalt und der Magnetdicke zusammensetzt.

Das Ankerfeld bildet sich so aus, daß das von den Dauermagneten hervorgerufene Erregerfeld an der einen Kante der Dauermagnete überhöht und an der anderen Kante abgeschwächt wird. Neben der Entmagnetisierungsgefahr bedingt die durch die Ankerrückwirkung hervorgerufene Feldüberhöhung eine Spannungsreserve bei Bauelementen des Umrichters, wie z. B. Transistoren, Thyristoren, Kommutierungseinrichtung und somit einem erhöhten Aufwand.

Weiterhin ist aus der DE-OS 26 37 705 ein Kleinmotor mit Dauermagneterregung bekannt, bei welchem die Dauermagnete im Ständer angeordnet sind. Der Läufer trägt eine Kommutatorwicklung, die über Bürsten und Kommutator von einer Gleichspannungsquelle gespeist ist. Dadurch ist eine feste Orientierung des Läuferstrombelags zum von den Dauermagneten im Ständer hervorgerufenen Erregerfeld gegeben. Der Läuferstrombelag ruft ein Magnetfeld (Ankerfeld) hervor, das bei hoher Belastung des Motors die Dauermagnete an den ablaufenden Kanten irreversibel entmagnetisieren kann. Um diesen schädlichen Einfluß des Ankerfeldes zu unterdrücken, ist jeder Dauermagnet so gestaltet, daß die Dicke in Magnetisierungsrichtung von der auflaufenden Kante des Dauermagneten zur ablaufenden Kante des Dauermagneten hin zunimmt. Durch diese Maßnahme wird weiterhin für einen Belastungswert ein angenähert konstanter Feldverlauf im Luftspalt über den Dauermagneten erreicht.

Der Erfindung liegt die Aufgabe zugrunde, für eine stromrichtergespeiste elektrische Maschine der eingangs beschriebenen Art die ankerrückwirkungsbedingte Überdimensonierung (Spannungsreserve) der Schaltelemente des Stromrichters zu verringern.

Zur Lösung dieser Aufgabe ist gemäß der Erfindung eine elektrische Maschine als Synchronmotor mit bevorzugter Drehrichtung so ausgebildet, daß jeder Dauermagnet längs seiner ganzen Erstreckung gegenüber der dem Läufer zugewandten Statoroberfläche einen konstanten Abstand und eine Dicke in Magnetisierungsrichtung aufweist, die von der einen Kante des Dauermagneten zur anderen Kante des Dauermagneten hin in Richtung der bevorzugten Drehrichtung zunimmt, wobei die Dicke an der einen Kante angenähert Null ist und daß von dieser Kante ausgehend in der Gegendrehrichtung zur benachbarten Pollücke hin der Abstand zwischen der dem Läufer zugewandten Ständeroberfläche und dem Läufereisen (magnetischer Luftspalt) zunimmt.

Bei einem derartig ausgebildeten elektrischen Motor synchroner Bauart ist der Magnetwerkstoff asymmetrisch zur Mitte zwischen den Pollücken angeordnet und er erstreckt sich - von dieser Mitte aus gesehen - auch ungleichmäßig weit nach beiden Seiten. Dadurch ist der negative Einfluß des Ankerfeldes stark verringert. Weil in Bereichen, in denen die feldschwächende Wirkung des Ständerstrombelages auftritt, mehr Magnetwerkstoff und somit ein größerer magnetischer Luftspalt als in Bereichen, in denen die feldverstärkende Wirkung des Ständerstrombelages auftritt, vorgesehen ist, wird in den Bereichen mit viel Magnetwerkstoff einerseits ein starkes Erregerfeld hervorgerufen und andererseits bildet sich das Ankerfeld aufgrund des größeren magnetischen Luftspaltes, den der Magnetwerkstoff darstellt, nicht stark aus, so daß die Schwächung des Feldes der Dauermagnete gering ist. Bei geeigneter Formgebung der Dauermagnete, unter Berücksichtigung der Ständerwicklungsausführung und des Speisungsverfahrens der elektrischen Maschine, wird im Bereich zwischen den Pollücken bei Nennbetrieb ein angenähert konstantes Magnetfeld erzielt, so daß wegen der fehlenden Feldüberhöhung nur eine geringe Spannungsreserve bei den Bauelementen des Umrichters vorgesehen werden muß. Weiterhin verringern sich die Verluste durch Pulsation in den umlaufenden Dauermagneten, da die Weite der Bedeckung mit Magnetmaterial, im Verhältnis zur Polteilung, geringer ist als bei herkömmlichen Maschinen. Dies ist besonders bei größeren elektrischen Maschinen wichtig, bei denen die Verlustwärme des Läufers nur durch den Luftspalt durchströmende Kühlluft abgeführt werden kann.

Ferner sind die Dauermagnete leicht innerhalb der elektrischen Maschine durch die Ständerwicklung aufmagnetisierbar. Denn es können diejenigen Leiter bzw. Spulen der Ständerwicklung zum Aufmagnetesieren verwendet werden, die den nicht mit Magnetwerkstoff versehenen Bereichen des Läufers gegenüberliegen. Dagegen können bei herkömmlichen Maschinen nur die Leiter der Ständerwicklung verwendet werden, die den Pollücken gegenüberliegen. Weil diese Bereiche beim Gegenstand der Erfindung breiter sind als bei herkömmlichen Maschinen stehen mehr Leiter zum Aufmagnetisieren zur Verfügung, wodurch kleinere Aufmagnetisierungsströme notwendig sind, bzw. nunmehr eine höhere Feldstärke zur Aufmagnetisierung erreicht wird.

Im folgenden sei die Erfindung noch anhand des in der Figur der Zeichnung dargestellten Ausführungsbeispiels näher erläutert.

Die Figur zeigt schematisch die Anordnung und Ausbildung der elektromagnetisch aktiven Teile eines dauermagneterregten mehrpoligen Synchronmotors mit Radialfeld gemäß der Erfindung in abgewickelter Darstellung.

Die radiale Richtung ist durch den Pfeil 1 und die Umfangsrichtung ist durch den Pfeil 2 bezeichnet. Der Ständer 3 eines Stromrichtermotors trägt eine Mehrphasenwicklung, von der zur Vereinfachung der Darstellung lediglich die Strombeläge einiger Leiter 4 dargestellt sind. Die Mehrphasenwicklung des Ständers 3 wird von einem nicht dargestellten Stromrichter mit rechteckförmigen Strömen gespeist.

Der weichmagnetische Teil 5 des Läufers 6 besteht aus Blechen. Auf der dem Ständer 3 zugewandten Mantelfläche des weichmagnetischen Teils 5 sind Dauermagnete 7 angeordnet. Die Dauermagnete 7 dienen der Erregung des Motors und bestehen aus einem hartmagnetischen Werkstoff mit hoher Remanenzinduktion und hoher Koerzitivfeldstärke, z. B. einem Werkstoff auf SmCo-Basis. Die Dauermagnete 7 sind aus quaderförmigen Blöcken 8, die sich in axialer Richtung erstrecken, zusammengesetzt und werden durch die Bandage 9 fliehkraftsicher am Läufer 6 gehalten. Die quaderförmigen Blöcke 8 können alle gleicher Art sein, dann sind die Herstellung und die Lagerung besonders günstig. Die Dauermagnete 7 füllen nicht die gesamte Polteilung 10 aus. Die am Umfang des Läufers 6 liegenden Kanten 11, 12 der Dauermagnete 7 begrenzen die Pollücken 13 und die Lücken 14 zwischen der Bandage 9 und dem weichmagnetischen Teil 5 des Läufers 6. Um eine gleichmäßige und beständige Belastung der Bandage 9 zu erhalten, sind die Pollücken 13 und die Lücken 14 zwischen der Bandage 9 und dem weichmagnetischen Teil 5 des Läufers 6 mit nichtmagnetischen Werkstoffen z. B. Kupfer ausgefüllt. Weiterhin wird durch die Bandage 9 eine glatte Läuferoberfläche erzielt, so daß die Luftreibungsverluste im annähernd konstanten mechanischen Luftspalt 15 gering sind.

Die Dauermagnete 7 sind in radialer Richtung (Pfeil 1) magnetisiert. Die Dicke in Magnetisierungsrichtung (Pfeil 1) jedes Dauermagneten 7 nimmt von der einen Kante 11 zur anderen Kante 12 hin in Richtung der Drehung (Pfeil 16) zu.

Zweckmäßigerweise erfolgt diese Zunahme gleichmäßig um den Betrag der Dicke eines quaderförmigen Blockes 8. Die hierzu notwendigen Stufen im weichmagnetischen Teil 5 des Läufers 6 sind ausgestanzt, da der weichmagnetische Teil 5 des Läufers 6 aus Blechen besteht, wodurch eine einfache Fertigung des Läufers 6 gegeben ist. Wegen der Krümmung der Läuferoberfläche entstehen geringe Fugen zwischen den quaderförmigen Blöcken 8, die jedoch bei mehrpoligen Maschinen wegen deren geringen Krümmung vernachlässigbar sind.

Von der Kante 11 des Dauermagneten 7 ausgehend zur benachbarten Pollücke 13 hin nimmt der radiale Abstand 17 zwischen der dem Läufer 6 zugewandten Oberfläche des Ständer 3 und dem weichmagnetischen Teil 5 des Läufers 6 zu. Dieser Abstand 17 setzt sich zusammen aus der Größe des Luftspaltes 15, der Dicke der Bandage 9 und der Dicke des Füllmaterials in der Lücke 14.

Somit ist der Magnetwerkstoff asymmetrisch zur Mitte 18 zwischen den Pollücken 13 angeordnet. Auch die Bedeckung mit Magnetwerkstoff zu beiden Seiten der Mitte 18 erstreckt sich ungleichmäßig weit. Diese asymmetrische und ungleichmäßig weite Bedeckung mit Magnetwerkstoff bewirkt im Zusammenhang mit der Speisung der Ständerwicklung eine hohe Ausnutzung des Motors. Die Ständerwicklung des Stromrichtermotors ist so gespeist, daß die Mitte 18 bei Nennbetrieb den kommutierenden Leitern der Ständerwicklung um angenähert 90° elektrisch (eine halbe Polteilung 10) nacheilt. Bei Nennbetrieb ergibt sich im Luftspalt 15 ein angenähert konstantes Feld im Bereich zwischen den Pollücken 13. Damit stimmt die Wellenform des Feldverlaufs im Luftspalt 15 mit dem zeitlichen Verlauf der speisenden Ströme angenähert überein, so daß gegenüber einer symmetrischen Drehstrommaschine mit sinusförmigen Feld und gleichen Amplitudenwerten für Strom und Feld angenähert eine Leistungssteigerung um den Faktor 2 erzielt wird. Es tritt keine Feldüberhöhung wie bei Maschinen mit Dauermagneten konstanter Dicke auf, so daß die Schaltelemente des Stromrichters kaum überdimensioniert werden müssen. Da der Mittelwert der Induktion von ähnlicher Größe wie der Maximalwert der Induktion ist, ist eine hohe Ausnutzung des Eisens des Motors erzielt. Da nicht der ganze weichmagnetische Bereich zwischen den Pollücken 13 mit Magtnetwerkstoff bedeckt ist, werden die Pulsationsverluste in den Dauermagneten 7 verringert.

Die Dauermagnete 7 bzw. die quaderförmigen Blöcke 8 werden zur Montage leicht vormagnetisiert auf den weichmagnetischen Teil 5 aufgebracht, wodurch sich die Blöcke 8 selbst halten und die Montage des Läufers 6 vereinfacht ist. Die endgültige Aufmagnetisierung der Dauermagnete 7 erfolgt nach der Bandagierung des Läufers 6 innerhalb des Ständers 3 des Stromrichtermotors durch die Leiter 4.

## Patentansprüche

1. Elektrische Maschine synchroner Bauart, deren Ständerwicklung (4) von einem Stromrichter gespeist und die durch Dauermagnete (7) am Läufer (6) erregt ist, zwischen denen sich Pollücken (13) befinden, bei welcher der Läufer (6) einen weichmagnetischen Teil aufweist, auf dessen Mantelfläche die Dauermagnete (7) unmittelbar am (mechanischen) Luftspalt (15) liegend angeordnet sind, **dadurch gekennzeichnet,** daß die elektrische Maschine ein Synchronmotor mit bevorzugter Drehrichtung (16) ist, daß jeder Dauermagnet (7) längs seiner ganzen Erstreckung gegenüber der dem Läufer zugewandten Statoroberfläche einen konstanten Abstand und eine Dicke in Magnetisierungsrichtung (1) aufweist, die von der einen Kante (11) des Dauermagneten (7) zur anderen Kante (12) des Dauermagneten (7) hin in Richtung der bevorzugten Drehrichtung (16) zunimmt, wobei die Dicke an der einen Kante (11) angenähert Null ist und daß von dieser Kante ausgehend in der Gegendrehrichtung zur benachbarten Pollücke (13) hin der Abstand (17) zwischen der dem Läufer (6) zugewandten Ständeroberfläche und der Mantelfläche des weichmagnetischen Teils (5) des Läufers (6) (magnetischer Luftspalt) zunimmt.

2. Elektrische Maschine nach Anspruch 1, **dadurch gekennzeichnet,** daß die Dauermagnete (7) aus quaderförmigen Blöcken (8) zusammengesetzt sind, die durch eine Bandage (9) am Läufer (6) gehalten sind und daß die Pollücken (13) und Lücken (14) zwischen Bandage (9) und dem weichmagnetischen Teil (5) des Läufers (6) mit nicht magnetischen Material ausgefüllt sind.

3. Elektrische Maschine nach Anspruch 1 oder Anspruch 2, **dadurch gekennzeichnet,** daß der weichmagnetische Läufer (6) aus Blechen aufgebaut ist.

4. Elektrischen Maschine nach einem oder mehreren der Ansprüche 1 bis 3, **dadurch gekennzeichnet,** daß der Ständer (3) eine symmetrische Mehrphasenwicklung, deren Phasenzahl größer oder gleich drei ist, trägt und daß diese Wicklung mit Strömen gespeist ist, deren zeitlicher Verlauf rechteckförmig ist.

## Claims

1. Electrical machine of the synchronous type the stator winding (4) of which is fed by a current transformer and which is excited by permanent magnets (7) on the rotor (6), between which pole gaps (13) are located, in which the rotor (6) has a soft magnetic part, on the lateral surface of which the permanent magnets (7) are arranged lying directly on the (mechanical) air gap (15), characterised in that the electrical machine is a synchronous motor with preferred direction of rotation (16), in that each permanent magnet (7) is at a constant distance along its whole extent from the stator surface facing the rotor and a has thickness in the magnetization direction (1) which increases from the one edge (11) of the permanent magnet (7) to the other edge (12) of the permanent magnet (7) in the direction of the preferred direction of rotation (16), whereby the thickness of the one edge (11) is almost nil and in that emanating from this edge in the opposing direction of rotation to the adjacent pole gap (13) the distance (17) between the stator surface facing the rotor (6) and the lateral surface of the soft magnetic part (5) of the rotor (6) (magnetic air gap) increases.

2. Electrical machine according to claim 1 characterised in that the permanent magnets (7) are composed of rectangular blocks (8) which are held by a banding (9) on the rotor (6) and in that the pole gaps (13) and the gaps (14) between the banding (9) and the soft magnetic part (5) of the rotor (6) are filled with non-magnetic material.

3. Electrical machine according to claim 1 or 2, characterised in that the soft magnetic rotor (6) is constructed of sheet steel.

4. Electrical machine according to one or several of claims 1 to 3, characterised in that the stator (3) carries a symmetrical multi-phase winding, the phase number of which is three or greater than three and in that this winding is fed with currents, the time characteristics of which are rectangular.

## Revendications

1. Machine électrique du type synchrone, dont l'enroulement statorique (4) est alimenté par un convertisseur et qui est excitée par des aimants permanents (7) montés sur le rotor (6) et entre lesquels se situent des espaces interpolaires (13), machine dans laquelle le rotor (6) comporte une partie faite avec un matériau magnétique doux et sur la surface latérale de laquelle les aimants permanents (7) sont disposés de manière à se situer directement au niveau de l'entrefer (mécanique) (15), caractérisée par le fait que ladite machine électrique est un moteur synchrone à sens de rotation privilégié (16), que chaque aimant permanent (7) présente, le long de toute son extension, par rapport à la surface du stator voisine du rotor, une distance constante et une épaisseur dans le sens de l'aimantation (1) qui croit en direction du sens de rotation privilégié (16), entre un premier bord (11) de l'aimant permanent (7) et l'autre bord de l'aimant permanent (7), l'épaisseur étant approximativement nulle audit premier bord (11) et qu'à partir de ce bord (11) et l'espace interpolaire voisin (13) la distance (17), prise dans le sens de rotation opposé, croît entre la surface statorique voisine du rotor (6) et la surface latérale de la partie (5), en matériau magnétique doux, du rotor (6) (entrefer magnétique).

2. Machine électrique selon la revendication 1, caractérisée par le fait que les aimants permanents (7) sont assemblés à partir de blocs parallélépipédiques (8) qui sont portés par le rotor (6) à l'aide d'une frette (9) et que les espaces interpolaires (13) et les espaces (14) entre les frettes (9) et la partie (5), en matériau magnétique doux, du rotor sont comblés avec un matériau non magnétique.

3. Machine électrique selon la revendication 1 ou 2, caractérisée par le fait que le rotor (6) en un matériau magnétique doux est constitué à l'aide de tôles.

4. Machine électrique selon une ou plusieurs des revendications 1 à 3, caractérisée par le fait que le stator (3) porte un enroulement polyphasé symétrique, dont le nombre de phases est supérieur ou égal à trois, et que cet enroulement est alimenté avec des courants dont l'allure, dans le temps, est rectangulaire.